# FASCICULE DE BREVET EUROPEEN

(11) **EP 1 184 216 B1**
(45) Date de publication et mention de la délivrance du brevet: **23.07.2008**
(21) Numéro de dépôt: 01402221.4
(22) Date de dépôt: 24.08.2001
(51) Int. Cl.: B60H 1/03

(54) **Dispositif de chauffage de l'habitacle d'un véhicule automobile**
Vorrichtung zur Heizung des Innenraumes eines Kraftfahrzeuges
Device for the heating of the passenger compartment of a motor vehicle

(30) Priorité: 04.09.2000 FR 0011236
(43) Date de publication de la demande: 06.03.2002
(73) Titulaire: RENAULT S.A.S., 92100 Boulogne Billancourt (FR)
(72) Inventeur: Ballesteros, Guillermo, 77290 Mitry Mory (FR); Ripoll, Christophe, 78220 Viroflay (FR)

(56) Documents cités:
- EP-A- 0 665 129
- DE-A- 4 433 814
- DE-C- 19 728 589
- US-A- 4 348 583
- US-A- 5 990 459

## Description

La présente invention est relative à un dispositif de chauffage de l'habitacle d'un véhicule automobile du type dans lequel le circuit d'eau de refroidissement du moteur à combustion interne du véhicule est utilisé également pour le chauffage de l'habitacle, lorsque le besoin s'en fait sentir. Un dispositif de chauffage selon le préambulé de la revendication 1 est par exemple connu du document DE-A-4433814.

Le problème qui est à la base de l'invention concerne spécifiquement les véhicules automobiles récents équipés de moteurs à haut rendement thermique, comme par exemple les moteurs à injection directe. Dans le cas de ces véhicules, la chaleur dissipée par le moteur à combustion interne peut ne pas être suffisante pour assurer le chauffage de l'habitacle.

Ainsi, il est déjà connu, de prévoir dans le circuit de refroidissement du moteur un dispositif de chauffage auxiliaire qui permet de porter la température de l'eau de refroidissement à un niveau suffisant pour réchauffer l'habitacle. Le dispositif de chauffage auxiliaire est en général un thermoplongeur noyé dans le circuit d'eau de refroidissement du moteur et équipé d'une résistance à coefficient de température positif. Le rôle de ce dernier consiste à ajuster la quantité de chaleur devant être cédée à l'eau de refroidissement pour combler le déficit accusé par la chaleur dégagée par le moteur. Le thermoplongeur est commandé par un relais qui, en fonction des besoins en chauffage exprimés par une demande du conducteur ou un autre paramètre de fonctionnement du moteur, peut être excité pour brancher le thermoplongeur sur le réseau de bord du véhicule ou l'en déconnecter. C'est donc essentiellement une commande par tout ou rien.

L'inconvénient de ce type de chauffage auxiliaire réside dans les perturbations qu'il impose au réseau de bord du véhicule. En effet, la puissance du dispositif de chauffage peut atteindre jusqu'à 1,5 kW de sorte que son branchement ou sa coupure peut provoquer des sauts de tension influant défavorablement notamment sur les équipements de bord nécessitant une tension d'alimentation stable. Ces sauts de tension peuvent également être ressentis par le conducteur du véhicule au niveau de l'éclairage, par exemple. Ils empêchent également toute gestion efficace du réseau de bord.

Enfin, les brusques variations de courant dans les conducteurs d'alimentation dues au branchements et aux débranchements du chauffage induisent des perturbations électromagnétiques gênantes pour l'électronique de bord.

L'invention a pour but de proposer un dispositif de chauffage auxiliaire ne présentant pas les inconvénients de la technique antérieure.

L'invention a donc pour objet un dispositif de chauffage pour l'habitacle d'un véhicule automobile propulsé par un moteur à combustion interne refroidi par un circuit d'eau de refroidissement, ce dispositif comprenant un caisson dans lequel circule l'eau de refroidissement et au moins un élément chauffant raccordé au réseau de bord du véhicule et associé audit caisson pour transférer de la chaleur à l'eau se trouvant dans ledit caisson, ledit élément chauffant étant connecté à des moyens de régulation qui, en fonction d'un signal de consigne traduisant une demande de chauffage, envoient dans ledit élément chauffant la puissance électrique nécessaire pour satisfaire cette demande de chauffage, ce dispositif de chauffage étant caractérisé en ce que lesdits moyens de régulation comprennent une unité de commande transitoire pour, pendant les intervalles transitoires séparant les instants d'application de deux valeurs différentes dudit signal de consigne, assurer une transition graduelle de la puissance appliquée audit élément chauffant.

Grâce à ces caractéristiques, une transition du signal de consigne traduisant une modification de la demande en chauffage de l'habitacle, ne peut pas se dérouler avec un à-coup de demande de puissance au réseau de bord du véhicule de sorte qu'une telle demande ne sera pas perceptible pour le conducteur et ne pourra avoir une influence défavorable sur le fonctionnement des équipements du véhicule sensibles aux variations de la tension du réseau de bord. Enfin, la progressivité de variation de la puissance de chauffage évite les perturbations électromagnétiques au voisinage des ces équipements.

Selon d'autres caractéristiques avantageuses de l'invention:
- ladite unité de commande transitoire comprend un circuit de type RC auquel est appliqué ledit signal de consigne et dont la sortie est utilisée pour réguler ladite puissance de chauffage;
- ladite unité de commande transitoire comprend un circuit de type générateur de rampe auquel est appliqué ledit signal de consigne et dont la sortie est utilisée pour réguler ladite puissance de chauffage, ledit circuit étant déclenché à chaque variation dudit signal de consigne.
- ladite unité de commande transitoire est connectée à l'entrée d'un régulateur PI dont la sortie est connectée à un composant semi-conducteur commandé inséré dans ledit circuit de chauffage pour commander la puissance absorbée par celui-ci;
- ledit composant semi-conducteur commandé constitue lui-même un élément chauffant et il est monté à l'extérieur contre l'une des parois dudit caisson;
- ledit circuit de chauffage comprend également au moins une résistance chauffante et/ou un thermoplongeur monté(s) en série avec ledit composant semi-conducteur commandé;
- ladite résistance chauffante est montée à l'extérieur contre la paroi dudit caisson;
- ledit circuit de chauffage est connecté entre ledit réseau de bord et la masse dudit véhicule et ledit composant semi-conducteur commandé est connecté au réseau de bord;
- ledit circuit de chauffage est connecté entre ledit réseau de bord et la masse dudit véhicule et ledit composant semi-conducteur commandé est connecté à la masse;
- lesdits moyens de régulation sont agencés pour élaborer ledit signal de consigne en fonction d'au moins l'un des paramètres suivants: demande en chauffage du conducteur du véhicule, température extérieure, température de l'eau de refroidissement, régime dudit moteur à combustion interne, dévers de la batterie;
- lesdits moyens de régulation sont également agencés pour élaborer ledit signal de consigne en fonction de la puissance dissipée par ledit circuit de chauffage;
- lesdits moyens de régulation sont connectés à la jonction entre ledit composant semi-conducteur commandé et ladite résistance chauffante.

D'autres caractéristiques et avantages de l'invention apparaîtront au cours de la description qui va suivre, donnée uniquement à titre d'exemple et faite en se référant aux dessins annexés sur lesquels:
- les figures 1 à 3 montrent trois modes de réalisation du dispositif de chauffage selon l'invention; et
- la figure 4 est un diagramme des temps illustrant le fonctionnement du dispositif de chauffage selon l'invention.

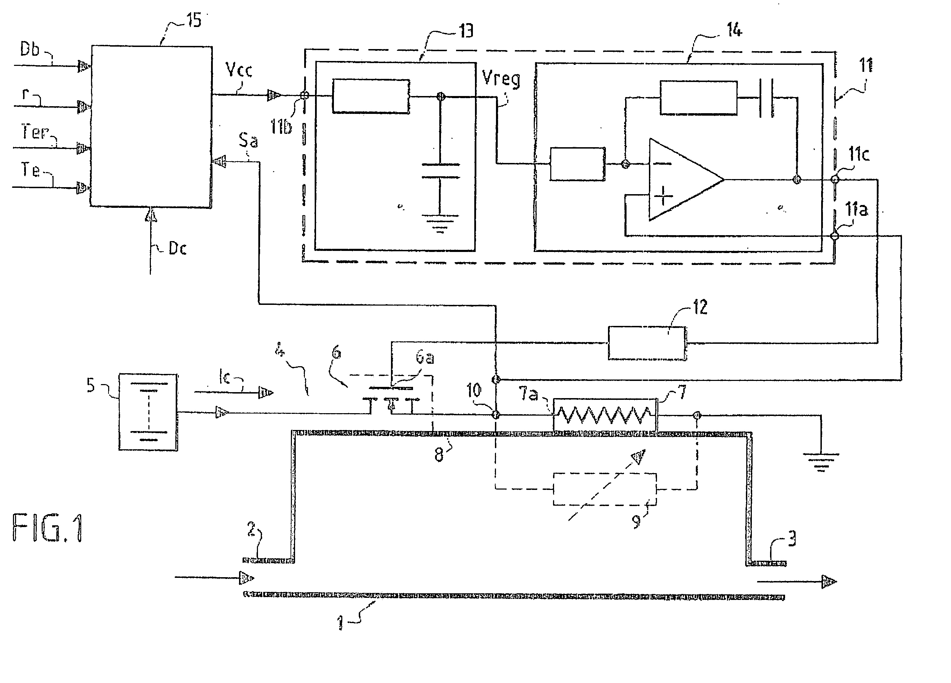

Selon le mode de réalisation de l'invention représenté à la figure 1, le dispositif de chauffage comprend un caisson 1 présentant une entrée 2 et une sortie 3 pour l'eau de refroidissement d'un moteur à combustion interne (non représenté) d'un véhicule automobile. Ce caisson 1 est connecté dans le circuit de refroidissement de celui-ci et dans celui qui assure la dissipation de la chaleur dans l'habitacle, ces circuits étant par ailleurs classiques.

Le dispositif selon l'invention comprend également un circuit électrique de chauffage 4 alimenté par le réseau de bord du véhicule symbolisé ici par la batterie 5 et connecté par ailleurs à la masse. Dans ce circuit de chauffage 4 sont connectés en série un composant de puissance commandé 6 de type semi-conducteur et une résistance chauffante 7.

Le composant de puissance commandé 6 est de préférence un transistor de type MOSFET, d'autres types de composants analogues tels que des transistors bipolaires, des IGBT ou des thyristors pouvant cependant être utilisés.

Le composant est fixé sur une paroi 8 du caisson 1 de telle façon que lorsqu'il est parcouru par un courant, il puisse céder les calories engendrées en son sein à l'eau se trouvant dans le caisson 1 à travers la paroi 8.

De même, la résistance chauffante 7 est placée dans un boîtier 7a fixée sur la paroi 8 de telle façon que lorsqu'elle est traversée par un courant, elle puisse céder ses calories à l'eau qui se trouve dans le caisson 1 à travers cette paroi.

En remplacement de la résistance 7 ou éventuellement en complément à celle-ci, il est également possible de monter dans le circuit de chauffage 4 un thermoplongeur 9 noyé dans l'eau de refroidissement à l'intérieur du caisson 1.

Le point de jonction 10 entre le transistor 6 et la résistance 7 est connecté à l'entrée de mesure 11a d'un circuit de régulation 11. Ce dernier comprend également une entrée de signal de consigne 11b et une sortie de régulation 11c, cette dernière étant raccordée par l'intermédiaire d'une résistance 12 à l'électrode de commande 6a du transistor 6.

Le circuit de régulation 11 comprend une unité de commande de transitoires 13 connectée à un régulateur proportionnel-intégral PI 14.

Dans le présent exemple de réalisation de l'invention, l'unité de commande de transitoires 13 est conçue comme un circuit retardateur RC capable d'engendrer un signal de commande de transitoires progressivement croissant ou décroissant, signal qu'il transmet au régulateur PI qui, pour sa part, est classique dans sa conception.

L'entrée 11b du circuit de régulation 11 est reliée à un calculateur 15 destiné à élaborer un signal de consigne de chauffage Vcc en fonction de paramètres tels que la demande de chauffage du conducteur Dc, la température extérieure Te, la température Ter de l'eau de refroidissement, le régime r du moteur à combustion interne, et/ou le dévers Db de la batterie du véhicule (terme désignant l'état en charge ou en décharge de la batterie du véhicule). Le calculateur 15 peut être une section du calculateur de commande du moteur du véhicule, laquelle comprend une table caractéristique permettant de fixer le signal de consigne Vcc en fonction d'au moins l'un des paramètres qui viennent d'être cités. Pour ce faire, le calculateur 15 reçoit de préférence également un signal actuel de chauffage Sa prélevé sur la jonction 10 du dispositif de commande, ce qui lui permet d'assurer une régulation en boucle fermée.

Selon une variante de réalisation de l'invention, l'unité de commande de transitoires 13 peut également être formé par un générateur de rampe (non représenté) qui engendre un signal en forme de rampe dont l'amplitude finale ou éventuellement la pente sont déterminées par le signal de consigne de chauffage Vcc. Ce générateur de rampe sera déclenché chaque fois qu'il se produit une variation du signal de consigne.

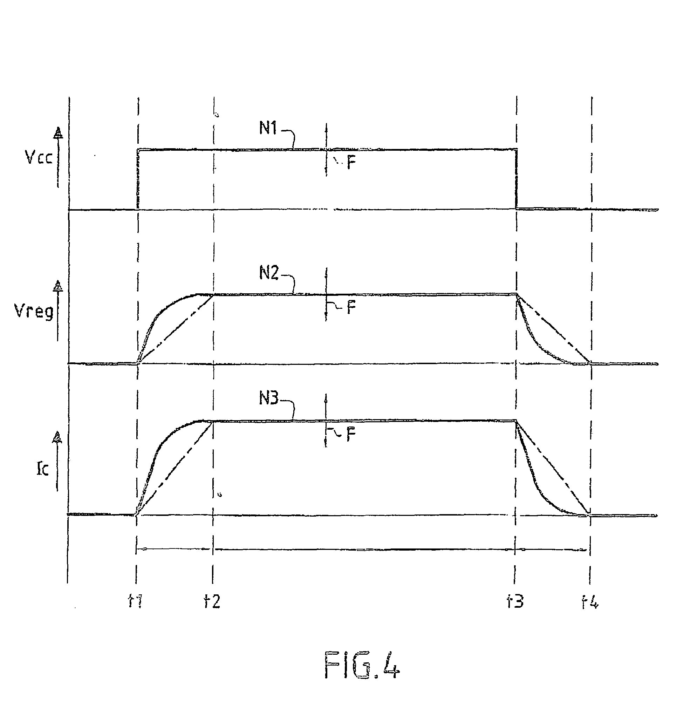

La figure 4 illustre le fonctionnement du dispositif de chauffage selon l'invention.

Avant le temps t1, aucun chauffage de l'habitacle n'est demandé par le calculateur 15. La tension Vcc est nulle, comme le sont la tension de régulation Vreg fournie par l'unité de commande de transitoires 13 et le courant de chauffage Ic circulant dans le circuit de chauffage 4.

Au temps t1, le calculateur 15 fournit un signal de consigne Vcc traduisant une demande de chauffage. Ce signal de consigne Vcc présente un niveau N1 qui est fonction des paramètres appliqués au calculateur 15, niveau qui peut donc varier en fonction des circonstances. On notera cependant que la transition de la valeur zéro à la valeur du niveau de consigne se fait brusquement.

Cependant, le signal de consigne Vcc étant appliqué à l'unité de commande de transitoires 13, le signal de régulation Vreg ne croîtra que progressivement vers un niveau N2 correspondant au niveau N1 du signal de consigne Vcc pendant un intervalle de temps t1-t2, la courbe de croissance étant soit une fonction exponentielle si l'unité de commande 13 est du type RC soit une droite si cette unité remplit une fonction de générateur de rampe.

Le signal de régulation Vreg est traité dans le régulateur PI qui commande le transistor 6 de telle façon que le courant Ic dans le circuit de chauffage 4 suive une courbe de croissance équivalente. En d'autres termes, pendant l'intervalle t1-t2, la puissance de chauffage demandée par la régulation n'est que progressivement produite par le circuit de chauffage 4 de sorte que la demande de chauffage ne se reflète pas de façon brusque dans le réseau de bord 5 du véhicule.

Pendant la période de chauffage entre les instants t2 et t3, la demande d'intensité de chauffage peut rester à un niveau constant N3, comme représenté ou elle peut varier selon les valeurs des paramètres appliquées au calculateur 15. Toutefois, chaque modification du signal de consigne Vcc donnera lieu à une transition progressive de l'ancien niveau vers le nouveau, de sorte que le réseau de bord 5 ne sera jamais sollicité de façon brusque pour répondre à la nouvelle demande de chauffage qu'elle soit croissante ou décroissante.

On notera que le calculateur 15 dispose du signal sa représentant la puissance de chauffage réelle à l'aide duquel il peut effectuer une régulation en boucle fermée du chauffage.

Un processus inverse se produit, si la demande de chauffage diminue ce qui se traduit par une réduction brusque du signal de consigne Vcc. La transition de la puissance de chauffage diminue alors progressivement pendant la période transitoire t3-t4, évitant ainsi également tout à-coup sur le réseau de bord 5.

Dans le mode de réalisation du dispositif de chauffage selon la figure 1, les composants chauffants comme la résistance 7 et/ou le thermoplongeur 9 sont montés du côté de la masse vis-à-vis du transistor 6.

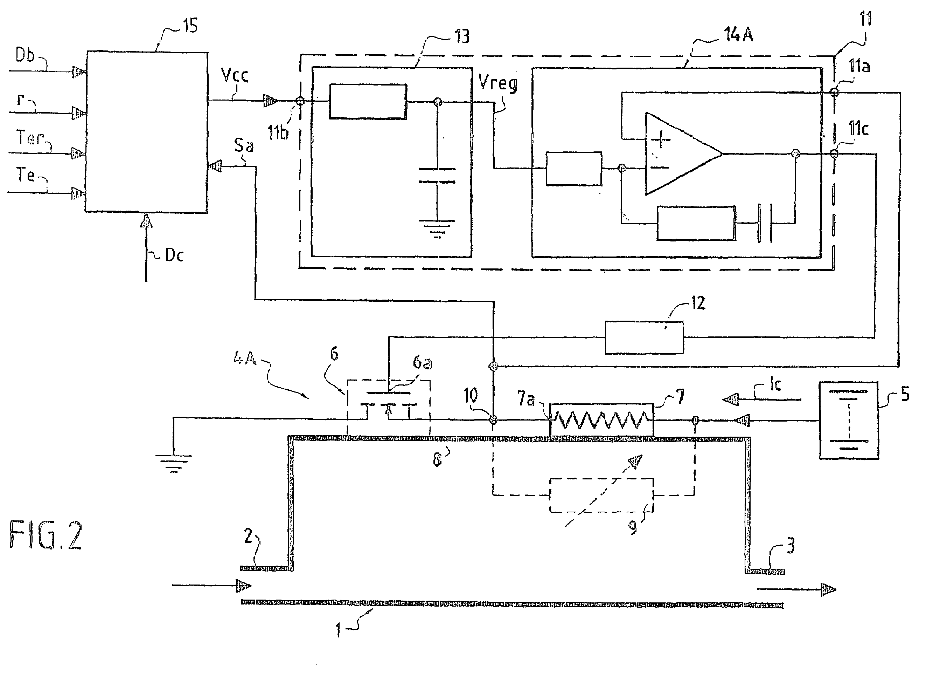

La figure 2 montre une variante du dispositif de chauffage comportant un circuit de chauffage 4A dans lequel la résistance chauffante 7 est montée du côté du réseau de bord 5 par rapport au transistor 6. Dans ce cas, le régulateur PI 14A doit présenter un agencement à polarités inverses comme cela apparaît sur la figure 2. Pour le reste cette variante est identique à celle de la figure 1 et son fonctionnement est identique.

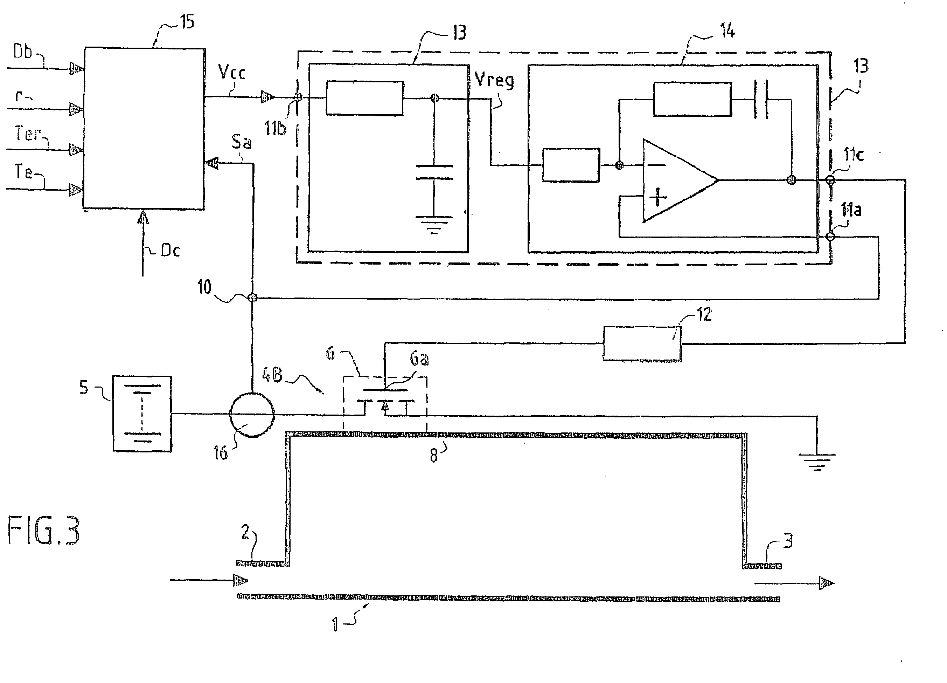

La variante de la figure 3 montre qu'il est également possible selon l'invention de se dispenser de composants chauffants tels que la résistance 7 et/ou le thermoplongeur 9, un composant semi-conducteur tel que le transistor 6 pouvant à lui seul assurer un apport de calories suffisant pour assurer le chauffage de l'habitacle du véhicule. Ainsi selon cette variante, le transistor 6 est branché directement entre le réseau de bord 5 et la masse dans un circuit de chauffage 4B dépourvu de tout autre composant chauffant. Bien entendu, on peut envisager d'utiliser plusieurs transistors en parallèle placés contre la paroi 8 du caisson 1. Dans cette variante, au lieu de mesurer la tension à la jonction 10 entre le transistor 6 et un composant chauffant 7 ou 9, on utilisera de préférence un capteur de courant 16 détectant l'intensité du courant circulant dans le circuit de chauffage 4B.

Selon une autre variante non représentée aux dessins, on pourrait également utiliser un transistor de puissance non associé au caisson 1, en chauffant ce dernier uniquement à l'aide de composants chauffants tels que la résistance 7 et/ou le thermoplongeur 9.

## Revendications

1. Dispositif de chauffage pour l'habitacle d'un véhicule automobile propulsé par un moteur à combustion interne refroidi par un circuit d'eau de refroidissement, ce dispositif comprenant un caisson (1) dans lequel circule l'eau de refroidissement et au moins un élément chauffant (6, 7, 9) raccordé au réseau de bord (5) du véhicule et associé audit caisson (1) pour transférer de la chaleur à l'eau se trouvant dans ledit caisson, ledit élément chauffant (6, 7, 9) étant connecté à des moyens de régulation (11, 15) qui, en fonction d'un signal de consigne (Vcc) traduisant une demande de chauffage, envoient dans ledit élément chauffant (6, 7, 9) la puissance électrique nécessaire pour satisfaire cette demande de chauffage, ce dispositif de chauffage étant **caractérisé en ce que** lesdits moyens de régulation (11, 15) comprennent une unité de commande transitoire (13) pour, pendant les intervalles transitoires séparant les instants d'application de deux valeurs différentes dudit signal de consigne (Vcc), assurer une transition graduelle de la puissance appliquée audit élément chauffant (6, 7, 9).

2. Dispositif de chauffage suivant la revendication 1, **caractérisé en ce que** ladite unité de commande transitoire (13) comprend un circuit de type RC auquel est appliqué ledit signal de consigne (Vcc) et dont la sortie est utilisée pour réguler ladite puissance de chauffage.

3. Dispositif de chauffage suivant la revendication 1, **caractérisé en ce que** ladite unité de commande transitoire (13) comprend un circuit de type générateur de rampe auquel est appliqué ledit signal de consigne (Vcc) et dont la sortie est utilisée pour réguler ladite puissance de chauffage, ledit circuit étant déclenché à chaque variation dudit signal de consigne (Vcc).

4. Dispositif suivant l'une quelconque des revendications 2 et 3 **caractérisé en ce que** ladite unité de commande transitoire (13) est connectée à l'entrée d'un régulateur PI (14, 14A) dont la sortie (11c) est connectée à un composant semi-conducteur commandé (6) inséré dans ledit circuit de chauffage (4; 4A; 4B) pour commander la puissance absorbée par celui-ci.

5. Dispositif de chauffage suivant la revendication 4, **caractérisé en ce que** ledit composant semi-conducteur commandé (6) constitue lui-même un élément chauffant et **en ce qu'**il est monté à l'extérieur contre l'une des parois (8) dudit caisson (1).

6. Dispositif de chauffage suivant l'une quelconque des revendications 4 et 5, **caractérisé en ce que** ledit circuit de chauffage (4; 4A) comprend également au moins une résistance chauffante (7) et/ou un thermoplongeur (9) monté(s) en série avec ledit composant semi-conducteur commandé (6).

7. Dispositif de chauffage suivant la revendication 6, **caractérisé en ce que** ladite résistance chauffante (7) est montée à l'extérieur contre l'une des parois (8) dudit caisson (1).

8. Dispositif de chauffage suivant l'une quelconque des revendications 6 et 7, **caractérisé en ce que** ledit circuit de chauffage (4) est connecté entre ledit réseau de bord (5) et la masse dudit véhicule et **en ce que** ledit composant semi-conducteur commandé (6) est connecté au réseau de bord (5).

9. Dispositif de chauffage suivant l'une quelconque des revendications 6 et 7, **caractérisé en ce que** ledit circuit de chauffage (4A) est connecté entre ledit réseau de bord (5) et la masse dudit véhicule et **en ce que** ledit composant semi-conducteur commandé (6) est connecté à la masse.

10. Dispositif de chauffage suivant l'une quelconque des revendications 1 à 9, **caractérisé en ce que** lesdits moyens de régulation (11, 15) sont agencés pour élaborer ledit signal de consigne (Vcc) en fonction d'au moins l'un des paramètres suivants: demande en chauffage du conducteur du véhicule (Dc), température extérieure (Te), température de l'eau de refroidissement (Ter), régime dudit moteur à combustion interne (r), dévers de la batterie (Db).

11. Dispositif de chauffage suivant la revendication 10, **caractérisé en ce que** lesdits moyens de régulation (11, 15) sont également agencés pour élaborer ledit signal de consigne (Vcc) en fonction de la puissance dissipée par ledit circuit de chauffage (4; 4A; 4B).

12. Dispositif de chauffage suivant la revendication 11, lorsqu'elle est combinée à la revendication 6, **caractérisé en ce que** lesdits moyens de régulation (11, 15) sont connectés à la jonction (10) entre ledit composant semi-conducteur commandé (6) et ladite résistance chauffante (7).

## Claims

1. Device for heating the passenger compartment of a motor vehicle propelled by an internal combustion engine cooled by a cooling water circuit, this device comprising a box structure (1) through which the cooling water circulates and at least one heating element (6, 7, 9) connected to the vehicle on-board network (5) and associated with the said box structure (1) to transfer heat to the water that lies in the said box structure, said heating element (6, 7, 9) being connected to control means (11, 15) which, as a function of a command signal (Vcc) conveying a request for heating, send to the said heating element (6, 7, 9) the electrical power needed to meet this demand for heating, this heating device being **characterized in that** the said control means (11, 15) comprise a transient-control unit (13) for ensuring a gradual transition of the power applied to the said heating element (6, 7, 9) during the transient periods that separate the instants at which two different values of the said command signal (Vcc) apply.

2. Heating device according to Claim 1, **characterized in that** the said transient-control unit (13) comprises a circuit of the RC type to which the said command signal (Vcc) is applied and the output of which is used to regulate the said heating power.

3. Heating device according to Claim 1, **characterized in that** the said transient-control unit (13) comprises a circuit of the ramp generator type to which the said command signal (Vcc) is applied and the output of which is used to regulate the said heating power, the said circuit being triggered each time the said demand signal (Vcc) varies.

4. Device according to either one of Claims 2 and 3, **characterized in that** the said transient-control unit (13) is connected to the input of a PI controller (14, 14A) the output (11c) of which is connected to a controlled semiconductor component (6) inserted in the said heating circuit (4; 4A; 4B) to control the power absorbed by that circuit.

5. Heating device according to Claim 4, **characterized in that** the said controlled semiconductor component (6) itself constitutes a heating element and **in that** it is mounted on the outside against one of the walls (8) of the said box structure (1).

6. Heating device according to either one of Claims 4 and 5, **characterized in that** the said heating circuit (4; 4A) also comprises at least one resistive heater (7) and/or an immersion heater (9) which is/are mounted in series with the said controlled semiconductor component (6).

7. Heating device according to Claim 6, **characterized in that** the said resistive heater (7) is mounted on the outside against one of the walls (8) of the said box structure (1).

8. Heating device according to either one of Claims 6 and 7, **characterized in that** the said heating circuit (4) is connected between the said on-board network (5) and the earth of the said vehicle, and **in that** the said controlled semiconductor component (6) is connected to the on-board network (5).

9. Heating device according to either one of Claims 6 and 7, **characterized in that** the said heating circuit (4A) is connected between the said on-board network (5) and the earth of the said vehicle and **in that** the said controlled semiconductor component (6) is connected to earth.

10. Heating device according to any one of Claims 1 to 9, **characterized in that** the said control means (11, 15) are designed to formulate the said command signal (Vcc) as a function of at least one of the following parameters: demand for heating from the driver of the vehicle (Dc), external temperature (Te), cooling water temperature (Ter), internal combustion engine speed (r), the inclination of the battery (Db).

11. Heating device according to Claim 10,
**characterized in that** the said control means (11, 15) are also designed to formulate the said command signal (Vcc) as a function of the power dissipated by the said heating circuit (4; 4A; 4B).

12. Heating device according to Claim 11 when combined with Claim 6, **characterized in that** the said control means (11, 15) are connected to the junction (10) between the said controlled semiconductor component (6) and the said resistive heater (7).

## Patentansprüche

1. Heizvorrichtung für den Innenraum eines Kraftfahrzeugs, das von einem von einem Kühlwasserkreislauf gekühlten Verbrennungsmotor angetrieben wird, wobei diese Vorrichtung einen Kasten (1), in dem das Kühlwasser zirkuliert, und mindestens ein Heizelement (6, 7, 9) aufweist, das an das Bordnetz (5) des Fahrzeugs angeschlossen und dem Kasten (1) zugeordnet ist, um Wärme an das sich im Kasten befindliche Wasser zu übertragen, wobei das Heizelement (6, 7, 9) mit Regulierungseinrichtungen (11, 15) verbunden ist, die in Abhängigkeit von einem Sollsignal (Vcc), das eine Heizanforderung ausdrückt, die notwendige elektrische Leistung in das Heizelement (6, 7, 9) schicken, um diese Heizanforderung zu erfüllen, wobei diese Heizvorrichtung **dadurch gekennzeichnet ist, dass** die Regulierungseinrichtungen (11, 15) eine Übergangssteuereinheit (13) aufweisen, um während der Übergangsintervalle, die die Anwendungsmomente von zwei unterschiedlichen Werten des Sollsignals (Vcc) trennen, einen stufenweisen Übergang der an das Heizelement (6, 7, 9) angewendeten Leistung zu gewährleisten.

2. Heizvorrichtung nach Anspruch 1, **dadurch gekennzeichnet, dass** die Übergangssteuereinheit (13) eine Schaltung vom Typ RC aufweist, an die das Sollsignal (Vcc) angelegt wird und deren Ausgangssignal verwendet wird, um die Heizleistung zu regulieren.

3. Heizvorrichtung nach Anspruch 1, **dadurch gekennzeichnet, dass** die Übergangssteuereinheit (13) eine Schaltung vom Typ Rampengenerator aufweist, an die das Sollsignal (Vcc) angelegt wird und deren Ausgangssignal verwendet wird, um die Heizleistung zu regulieren, wobei die Schaltung bei jeder Veränderung des Sollsignals (Vcc) aktiviert wird.

4. Heizvorrichtung nach einem der Ansprüche 2 und 3, **dadurch gekennzeichnet, dass** die Übergangssteuereinheit (13) mit dem Eingang eines PI-Reglers (14, 14A) verbunden ist, dessen Ausgang (11c) mit einem gesteuerten Halbleiterbauteil (6) verbunden ist, das in die Heizschaltung (4; 4A; 4B) eingefügt ist, um die von dieser absorbierte Leistung zu steuern.

5. Heizvorrichtung nach Anspruch 4, **dadurch gekennzeichnet, dass** das gesteuerte Halbleiterbauteil (6) selbst ein Heizelement bildet und dass es außen gegen eine der Wände (8) des Kastens (1) montiert ist.

6. Heizvorrichtung nach einem der Ansprüche 4 und 5, **dadurch gekennzeichnet, dass** die Heizschaltung (4; 4A) ebenfalls mindestens einen Heizwiderstand (7) und/oder einen Tauchsieder (9) aufweist, der (die) in Reihe mit dem gesteuerten Halbleiterbauteil (6) geschaltet ist (sind).

7. Heizvorrichtung nach Anspruch 6, **dadurch gekennzeichnet, dass** der Heizwiderstand (7) außen gegen eine der Wände (8) des Kastens (1) montiert ist.

8. Heizvorrichtung nach einem der Ansprüche 6 und 7, **dadurch gekennzeichnet, dass** die Heizschaltung (4) zwischen dem Bordnetz (5) und der Masse des Fahrzeugs verbunden ist und dass das gesteuerte Halbleiterbauteil (6) mit dem Bordnetz (5) verbunden ist.

9. Heizvorrichtung nach einem der Ansprüche 6 und 7, **dadurch gekennzeichnet, dass** die Heizschaltung (4A) zwischen dem Bordnetz (5) und der Masse des Fahrzeugs verbunden ist und dass das gesteuerte Halbleiterbauteil (6) mit Masse verbunden ist.

10. Heizvorrichtung nach einem der Ansprüche 1 bis 9, **dadurch gekennzeichnet, dass** die Regulierungseinrichtungen (11, 15) eingerichtet sind, um das Sollsignal (Vcc) in Abhängigkeit von mindestens einem der folgenden Parameter zu erarbeiten: Heizanforderung vom Fahrer des Fahrzeugs (Dc), Außentemperatur (Te), Temperatur des Kühlwassers (Ter), Drehzahl des Verbrennungsmotors (r), Ladezustand der Batterie (Db).

11. Heizvorrichtung nach Anspruch 10, **dadurch gekennzeichnet, dass** die Regulierungsmittel (11, 15) ebenfalls eingerichtet sind, um das Sollsignal (Vcc) in Abhängigkeit von der Leistung zu erarbeiten, die von der Heizschaltung (4; 4A; 4B) abgeleitet wird.

12. Heizvorrichtung nach Anspruch 11, wenn er mit Anspruch 6 kombiniert ist, **dadurch gekennzeichnet, dass** die Regulierungsmittel (11, 15) mit dem Übergang (10) zwischen dem gesteuerten Halbleiterbauteil (6) und dem Heizwiderstand (7) verbunden sind.
